(19) Europäisches Patentamt
European Patent Office
Office européen des brevets

(11) **EP 1 435 070 B1**

(12) **EUROPEAN PATENT SPECIFICATION**

(45) Date of publication and mention
of the grant of the patent:
**17.10.2012 Bulletin 2012/42**

(51) Int Cl.:
***G06T 7/20*** (2006.01)

(21) Application number: **02735771.4**

(22) Date of filing: **10.06.2002**

(86) International application number:
**PCT/IB2002/002146**

(87) International publication number:
**WO 2002/101651 (19.12.2002 Gazette 2002/51)**

(54) **FEATURE POINT SELECTION**

AUSWAHL EINES CHARAKTERISTISCHEN PUNKTES

SELECTION DE POINT CARACTERISTIQUE

(84) Designated Contracting States:
**AT BE CH CY DE DK ES FI FR GB GR IE IT LI LU MC NL PT SE TR**

(30) Priority: **11.06.2001 EP 01202217**
**05.11.2001 EP 01204206**

(43) Date of publication of application:
**07.07.2004 Bulletin 2004/28**

(73) Proprietor: **Trident Microsystems (Far East) Ltd.**
**Grand Cayman (KY)**

(72) Inventors:
- **WITTEBROOD,R.B.**
**Internationaal Octrooibureau B.V.**
**NL-5656 AA Eindhoven (NL)**
- **DE HAAN, Gerard**
**Internationaal Octrooibureau B.V.**
**NL-5656 AA Eindhoven (NL)**

(74) Representative: **Epping - Hermann - Fischer**
**Patentanwaltsgesellschaft mbH**
**Postfach 20 07 34**
**80007 München (DE)**

(56) References cited:
**EP-A- 0 952 552      EP-A- 1 011 074**
**WO-A2-01/39498**

- **PAPANIKOLOPOULOS N P ET AL: "Selection of features and evaluation of visual measurements for 3-D robotic visual tracking" INTELLIGENT CONTROL, 1993., PROCEEDINGS OF THE 1993 IEEE INTERNATIONAL SYMPOSIUM ON CHICAGO, IL, USA 25-27 AUG. 1993, NEW YORK, NY, USA,IEEE, 25 August 1993 (1993-08-25), pages 320-325, XP010137291 ISBN: 0-7803-1206-6**
- **KRISHNAN S ET AL: "2D feature tracking algorithm for motion analysis" PATTERN RECOGNITION, PERGAMON PRESS INC. ELMSFORD, N.Y, US, vol. 28, no. 8, 1 August 1995 (1995-08-01), pages 1103-1126, XP004062204 ISSN: 0031-3203**
- **MANJUNATH B S ET AL: "A new approach to image feature detection with applications" PATTERN RECOGNITION, PERGAMON PRESS INC. ELMSFORD, N.Y, US, vol. 29, no. 4, 1 April 1996 (1996-04-01), pages 627-640, XP004006578 ISSN: 0031-3203**
- **WITTEBROOD R B ET AL: "Real-time recursive motion segmentation of video data on a programmable device" ICCE. INTERNATIONAL CONFERENCE ON CONSUMER ELECTRONICS, LOS ANGELES, CA, USA, 19-21 JUNE 2001, vol. 47, no. 3, pages 559-567, XP002245246 IEEE Transactions on Consumer Electronics, Aug. 2001, IEEE, USA ISSN: 0098-3063 cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- WITTEBROOD R B ET AL: "Second generation DSP software for picture rate conversion" 2000 DIGEST OF TECHNICAL PAPERS. INTERNATIONAL CONFERENCE ON CONSUMER ELECTRONICS. NINETEENTH IN THE SERIES (CAT. NO.00CH37102), 2000 DIGEST OF TECHNICAL PAPERS. INTERNATIONAL CONFERENCE ON CONSUMER ELECTRONICS. NINETEENTH IN THE SERIES, LOS ANGLES, , pages 230-231, XP002245247 2000, Piscataway, NJ, USA, IEEE, USA ISBN: 0-7803-6301-9 cited in the application
- WITTEBROOD R B ET AL: "Feature point selection for object-based motion estimation on a programmable device" VISUAL COMMUNICATIONS AND IMAGE PROCESSING 2002, SAN JOSE, CA, USA, 21-23 JAN. 2002, vol. 4671, pt.1-2, pages 687-697, XP002245248 Proceedings of the SPIE - The International Society for Optical Engineering, 2002, SPIE-Int. Soc. Opt. Eng, USA ISSN: 0277-786X cited in the application
- ROSIN P L: "Thresholding for change detection", PROCEEDINGS OF THE INTERNATIONAL CONFERENCE ON COMPUTER VISION 1998, [Online] 1998, pages 274-279, XP007912284, Retrieved from the Internet: URL:http://users.cs.cf.ac.uk/Paul.Rosin/re sources/papers/thresh-iccv.pdf> [retrieved on 2010-02-23]

**Description**

The invention relates to feature point selection, to a motion vector estimation using such a feature point selection, to an image signal processing using such a motion vector estimation, and to a video display apparatus using such an image signal processing.

Object based motion estimation (OME) aims at segmenting a video sequence in image parts called *objects* and assigning a *motion model*, describing the movement and/or deformation the image part undergoes, to every object in the sequence. It is straightforward to, either calculate a motion model for a given image part, or segment the image with given motion models, however, in OME, neither the objects, nor the motion models are given. Therefore, the goal poses a chicken-and-egg problem. In the literature, various options to solve this problem have been proposed [3,9,10,11]. In previous publications, we have concluded that these proposals are all computationally complex, and we have designed a recursive OME algorithm that was so much more efficient that it could even be shown to run real-time on a DSP [1, 12].

WO 01/39498 describes a method and an apparatus for detecting objects of interest in an image processing system. This comprises steps for generating a difference image, segmenting the difference image into regions and identifying a number of silhouette candidates.

This earlier designed OME algorithm achieves the high efficiency by solving the chicken-and-egg problem in a clever recursive fashion, by calculating the parametric motion models on a very limited amount of picture data (the *feature points* of the image), by using a simple parameter optimization algorithm, and by segmenting the video using a sub-sampled version of the video signal.

Critical for the success of this approach is an intelligent choice of the feature points. In this description, we report on further progress in selecting the feature points. More particularly, we shall describe a new feature point selection algorithm, which particularly improves the convergence of the motion model parameter estimation function when using simple optimization techniques. The improvement will be quantified using alternative methods found in the literature and our previously used algorithm as references in the evaluation.

This description is organized as follows. Following this introduction, in Section 2 we summarize the earlier developed recursive OME method. Then, in Section 3, we focus on feature point selection methods, discuss some earlier methods and introduce the new concept. In Section 4, we evaluate these feature point selection algorithms, and in Section 5 we draw our conclusions.

2. Prior work

2.1. Motion models

In our earlier contributions to OME, we identified an object by a unique label $O$. With every object $O$, a parameter vector $\overline{P}_O = (t_x, t_y, z_x, z_y)$ is associated. This parameter vector describes the translation and zooming of the object. The relation between the parameter vector of an object $O$ and the motion (or **D**isplacement) vector, $\overline{D}$, of the object at the pixel-grid position $\vec{x} = \begin{pmatrix} x \\ y \end{pmatrix}$ in the image is:

$$\vec{D}_o\left(\vec{P}_o, \vec{x}\right) = \begin{bmatrix} t_x + z_x\left(x - x_{zc}\right) \\ t_y + z_y\left(y - y_{zc}\right) \end{bmatrix} \tag{1}$$

with $\begin{pmatrix} x_{zc} \\ y_{zc} \end{pmatrix}$ the center of zoom. To keep complexity acceptable, we fixed the number of objects to 5 without significantly losing performance.

2.2. Motion segmentation

*A motion segmentation* module assigns, to every block in the image, the best matching motion model. The resulting *segmentation mask, $M(\overline{X})$,* is therefore constructed by minimizing:

$$\varepsilon_b\left(\vec{P}_o,\bar{X},n\right)= \sum_{\bar{x}\in B(\bar{x})}\left|F(\bar{x})-F\left(\bar{x}-\bar{D}_o\left(\vec{P}_o,\bar{x}_c\right),n-1\right)\right| \tag{2}$$

Here $n$ is the image number of the luminance image $F$, $\overline{P}_O$ is the parameter vector associated with object $O$ and $\overline{X}$ is the location on the block-grid of block $B(\overline{X})$. To improve computational efficiency the displacement vector $\overline{D}_O$ is not calculated for every pixel, $\bar{x}$, in block $B(\overline{X})$ but only at a central pixel $\bar{x}_c$. Note that an upper case $\overline{X}$ indicates locations on the block grid and a lower case x indicates locations on the pixel grid. A detailed description of the motion segmentation is given in Reference [2].

2.3. Parameter estimation

*The parameter estimation* module determines the parameters of the motion models of the objects by minimising the parameter estimation error, equation 3, over a small set of feature points, *FS:*

$$\varepsilon_p\left(\vec{P}_o,n\right)= \sum_{\bar{X}\in FS}W_o\left(\bar{X}\right)\varepsilon_b\left(\vec{P}_o,\bar{X},n\right) \tag{3}$$

where individual feature points are weighted with $W_O(\overline{X})$

$W_O(\overline{X})>1$, if in the previous iteration motion model $O$ was assigned to the block $B(\overline{X})$ with a low segmentation error, $\varepsilon_b(\overline{P}_O,\overline{X},n)< T_s$.
$W_O(\overline{X})< 1$, if in the previous iteration another motion model was assigned to the block with a low segmentation error.
$W_O(\overline{X})=1$, otherwise, i.e. a motion model was assigned with a high segmentation error.

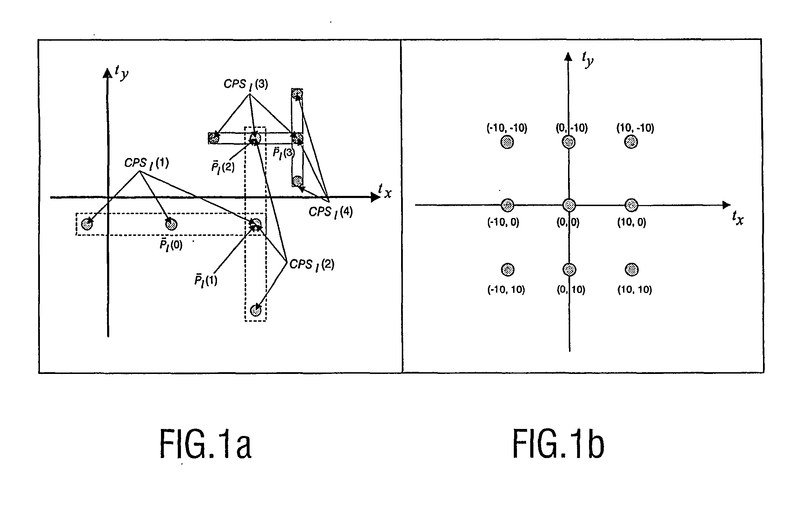

Every object has its own parameter estimator, $PE_O$, that estimates the object parameter vector using a orthogonal logarithmic search. Fig. 1a illustrates the logarithmic search procedure. The initial parameter vector $\overline{P}_I (0)$ is updated, resulting in the candidate parameter vector set $CPS_I(I)$. The best matching candidate from this set is selected, in this case $\overline{P}_I(1)$, and is input for the next iteration of the parameter estimator, i.e. parameter vector $\overline{P}_I(1)$ is updated which results in candidate parameter vector set $CPS_I (2)$, from this set the best matching parameter is selected $\overline{P}_I(2)$ and updated, and so on and so forth. The updates become smaller and smaller with every iteration. Each parameter estimator estimates a new object parameter vector by recursively updating a previously estimated parameter vector, $\vec{P}_o^n(k-1)$. Here $n$ is the image number, $o$ is the object and $k$ indicates the recursion of the parameter estimator. The new parameter vector is selected from a number of candidate parameter vectors, $\vec{CP}_o^n(k)$, as the one with the lowest parameter estimation error, $\varepsilon_p\left(\vec{CP}_o^n(k),n\right)$. The set of candidate vectors, $CPS_o^n(k)$, from which the best vector in iteration k is selected, is constructed according to:

$$CPS_o^n(k)= \left\{\vec{CP}_o^n(k)\middle|\vec{CP}_o^n(k)= \vec{P}_o^n(k-1)+ m\,\vec{UP}(k),\vec{UP}(k)\in UPS_o, m= -1,0,1\right\} \tag{4}$$

where $\vec{P}_o^n(k-1)$ is the best matching candidate from the previous recursion, i.e. the best matching candidate from subset $CPS_o^n(k-1)$ and $\vec{P}_o^n(0)= \vec{P}_o^{n-1}(K)$ is the best matching parameter vector obtained from the previous image pair. The update vectors, $\overline{U}P(k)$, decrease in length with increasing iteration number $k$. The update set $UPS_O$ is defined as:

$$UPS_o = \left\{ \begin{pmatrix} i \\ 0 \\ 0 \\ 0 \end{pmatrix}, \begin{pmatrix} 0 \\ i \\ 0 \\ 0 \end{pmatrix}, \begin{pmatrix} 0 \\ 0 \\ 1 \\ 0 \end{pmatrix}, \begin{pmatrix} 0 \\ 0 \\ 0 \\ 1 \end{pmatrix} \right\}, i = 1,2,4,8 \tag{5}$$

This algorithm blindly follows the parameter estimation error surface in the direction of the decreasing error. It is therefore very susceptible to local minima. Moreover, if there is not a monotonously decreasing path in the parameter estimation error surface from the position of the initial parameter vector to the global minimum, the probability that the search will yield the global minimum is small. Clearly, the optimal parameter estimation error surface is monotonously decreasing with a wide "funnel" leading to the global minimum.

2.4. Initial search

To reduce the risk of ending up in a local minimum the parameter estimation module can perform an initial search. During the initial search 10 parameter vectors are tested, 9 of which are distributed according to Fig. 1b. During the initial search, the best matching parameter vector is selected from these 9 parameter vectors, extended with the best parameter vector from the previous image. This parameter vector is input for the logarithmic search.

During this initial search only translation is considered. The set of 9 parameter vectors is extended with the best parameter vector from the previous image pair. This parameter vector is necessary to ensure that previous estimation successes are used in future estimations. The set of parameter vectors that are tested during the initial search are:

$$IPS_o^n = \left\{ \begin{pmatrix} \pm C \\ \pm C \\ 0 \\ 0 \end{pmatrix}, \begin{pmatrix} \pm C \\ 0 \\ 0 \\ 0 \end{pmatrix}, \begin{pmatrix} 0 \\ \pm C \\ 0 \\ 0 \end{pmatrix}, \begin{pmatrix} 0 \\ 0 \\ 0 \\ 0 \end{pmatrix}, \vec{P}_o^{n-1}(K) \right\}, C = 10 \tag{6}$$

The initial search minimizes the parameter estimation error over this set of parameter vectors:

$$I\vec{P} = \underset{IPS_o^n}{\arg\min} \left\{ \varepsilon_p \left( \vec{P}_o, n \right) \right\} \tag{7}$$

The resulting parameter vector is then input for the logarithmic search.

Experimentally, we found that the performance of the parameter estimation module greatly depends on the selection of the feature point set *FS*. In the following section, we will discuss a new method to select these feature points.

3. Feature point selection

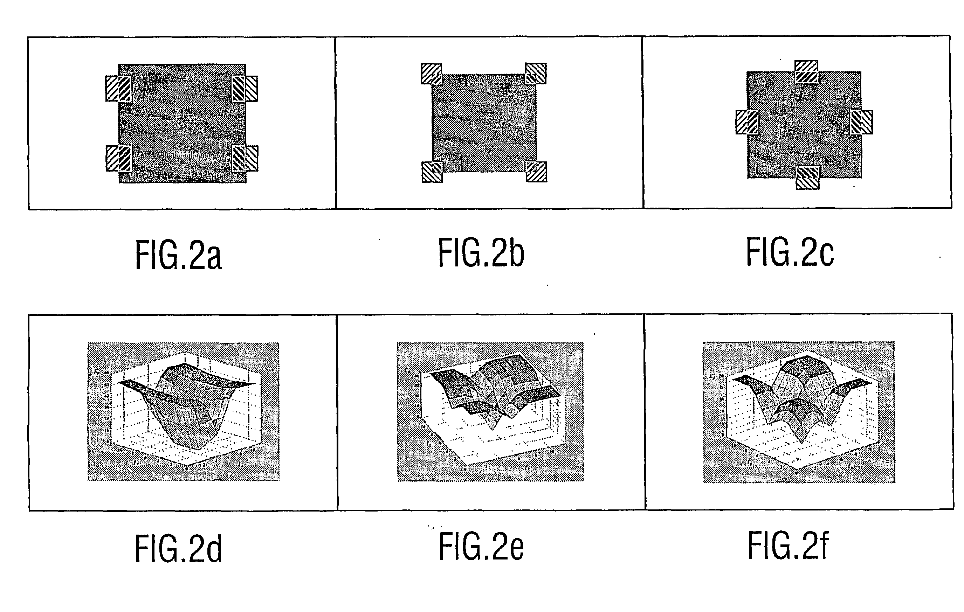

In order to prevent aperture problems [3], and thus parameter estimation problems, the set of feature points should have edges in at least two directions, as Fig. 1 illustrates. If the set of feature points does not have 2-D structure, then the parameter estimation error, $\varepsilon_o$ $(\vec{P}_o, n)$, does not have a unique minimum and the actual motion of the object cannot be determined, as shown in Figs. 2a and 2d. Fig. 2a shows a gray rectangular image object with a set of four feature points, which does not have 2-D structure. Fig. 2b shows the same gray rectangular image object with another set of four feature points which do have 2-D structure. Fig. 2c shows feature points that do not have 2-D structure within the blocks, but the whole set has 2-D structure. Figs. 2d, 2e and 2f show the parameter estimation error as function of the translation parameters corresponding to the feature points in Figs. 2a, 2b and 2c, respectively. Fig. 2a shows four feature points located on the vertically oriented edges of a gray block translating with $\overline{D}$ = (5,5). Fig. 2d shows the parameter estimation error as function of the translation parameters, $t_x$ and $t_y$. Clearly, this error surface does not have a unique minimum, as a number of parameter vectors draw the same minimum estimation error. This means that it is impossible to correctly estimate a parameter vector. Fig. 2b shows the situation in which the feature points themselves contain 2-D structure. The resulting parameter estimation error surface, Fig. 2e, shows a unique minimum at the position of the actual parameter vector. This makes accurate estimation of the parameter vector possible. In the case of the parameter estimation method described above, it is not necessary that all feature points contain 2-D structure since a number of feature points is combined. It suffices, therefore, that *the set of feature points* shows 2-D structure. This is indicated in Figs. 2c and 2f.

3.1. Traditional feature point detectors

A number of authors have reported on the detection of 2-D features. An overview is given in reference [4]. The algorithms presented in that article, e.g. the Moravec, the Plessey or the SUSAN detectors [5,6,7], are in general too computationally complex for use in a real-time OME on a programmable device. Furthermore, these detectors look for 2-D structure within the feature point. In our case, we are interested in 2-D structure within the complete set of feature points, which is a much more relaxed constraint. The Moravec interest operator is usually written as:

$$I_R(x,y) = \min\left\{ \sum_{x-2 \leq x' \leq x+2} \sum_{y-2 \leq y' \leq y+2} (I(x',y') - I(x'+1, y'))^2, \quad \sum_{x-2 \leq x' \leq x+2} \sum_{y-2 \leq y' \leq y+2} (I(x',y') - I(x', y'+1))^2, \right.$$

$$\left. \sum_{x-2 \leq x' \leq x+2} \sum_{y-2 \leq y' \leq y+2} (I(x'+1,y') - I(x', y'+1))^2, \quad \sum_{x-2 \leq x' \leq x+2} \sum_{y-2 \leq y' \leq y+2} (I(x',y') - I(x'+1, y'+1))^2 \right\} \tag{8}$$

The SUSAN detector is more difficult to capture in a single formula. The principle of SUSAN lies in determining the pixels that are valued equal as the central pixel of a small image region. This, so-called USAN (Univalue Segment Assimilating Nucleus) contains much information about the structure of the image. From the size, centroid and second moments 2-D features and edges can be detected.

These detectors usually require a number of pixel-frequent operations in order to determine the feature points. In order to determine 100 feature points the Moravec interest operator needs approximately $1 \times 10^9$ clock cycles. The DSP (Philips TriMedia, commercially available as TM1100) we used in our experiments allows $1 \times 10^7$ clock cycles per image. With some algorithmic optimization and with code optimizations the number of clock cycles needed by the detectors can be brought down with a factor of approximately 20 and sometimes even more. However, even if the number of clock cycles is reduced with 2 orders of magnitude, implementation on a DSP is not possible for real-time video applications.

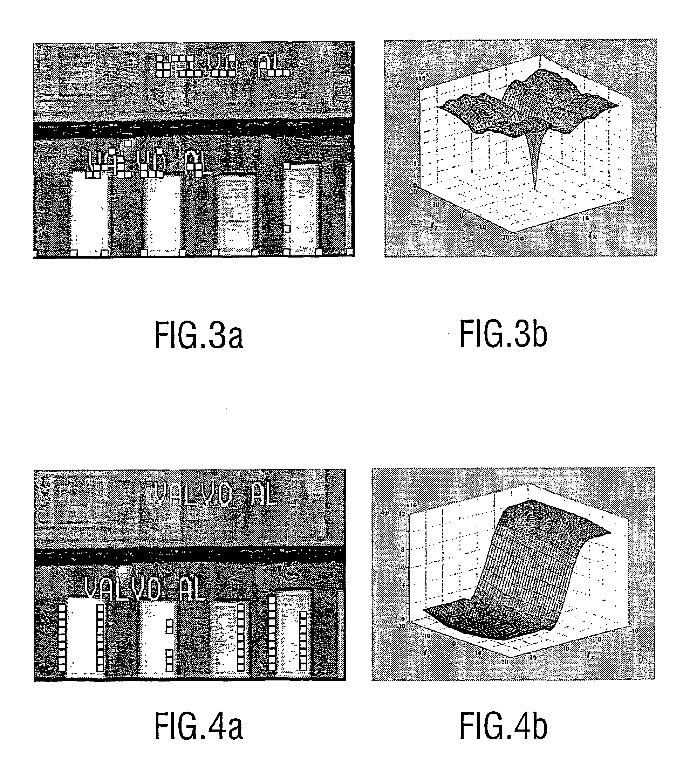

A less obvious drawback, than the one already mentioned, of these feature point detectors is that the minimization of equation 3 becomes a difficult task when using feature points determined with these feature detectors. To elucidate this problem we refer to Fig. 3. In Fig. 3 a an image is shown from an artificial video sequence in which the image content is translating from left to right with a horizontal velocity of 5 pixels per frame. Fig. 3b shows the parameter estimation error, $\varepsilon_p(\overline{P}_o, n)$, as a function of the translation parameters $t_x$ and $t_y$. To limit the computational complexity of the parameter estimator only 100 feature points are used, detected with the SUSAN corner detector. From Fig. 3 a we can see that the feature points are positioned at locations which show very steep luminance transitions.

Because of the steepness of the features within the feature points, the minimum of $\varepsilon_p(\overline{P}_o, n)$ is very localized, i.e: the "funnel" in the 3-D plot of the error surface is very narrow. In many cases this is exactly what you want, e.g. in tracking of individual feature points. In our case, we can only have a very simple (logarithmic search) algorithm to search for the global minimum. This low-complexity constraint results from the limitations of the programmable device on which the OME is implemented. Using the logarithmic search mentioned above, and using a random initial parameter vector, experiments show that the probability that the minimum is found amounts to 0.3. In all other cases the search algorithm ends up in local minima. This probability was found too low for accurate parameter estimation. There will be more about the experiments in Section 4.

3.2. New approach for efficient feature point detection

It is an object of the invention to provide and use a real-time feature detector. The invention is defined by the independent claims. The dependent claims define advantageous embodiments.

In the drawings,

Figs. 1a, 1b illustrate logarithmic search of parameter vectors;
Figs. 2a-2f illustrate feature point selection;
Figs. 3a, 3b illustrate problems with a prior art feature point detector;
Figs. 4a, 4b illustrate the parameter estimation error as a function of the translation error for the highest SAD method;
Figs. 5a, 5b illustrate the parameter estimation error as a function of the translation error for the random SAD method;
Figs. 6a, 6b illustrate the dependency of the different feature point selection methods on the number of feature points;
Figs. 7a, 7b illustrate the noise-dependency of the different feature point selection methods;
Fig. 8 shows the number of operations as a function of the number of feature points for the different feature point selection methods; and
Fig. 9 shows an embodiment of a display apparatus in accordance with the present invention.

In order to get a real-time feature detector for an OME on a DSP, we can use information that is produced by the normal operation of the motion segmentation module. Since this information is calculated anyway, the feature point detector itself causes little overhead. In the following two subsections some of the options are treated further.

### 3.2.1. Highest SAD method (HSAD)

If we define a fixed object, which covers the stationary regions in the image, then only the motion models of the moving parts have to be estimated. Moreover, if we take the absolute difference of two subsequent frames, than the regions in which this difference is above a certain noise-level, i.e. $\varepsilon_b(\overline{0,X},n) > T_n$ will have motion and, more importantly, will have structure in the direction of the motion [3]. In order to obtain a small set of feature points (small because of computational complexity) the remaining task is to select a subset from these regions, i.e.:

$$FS \subset \left\{ \vec{X} \middle| \varepsilon_b\left(\vec{0}, \vec{X}, n\right) > T_n \right\} \tag{9}$$

The advantage of this approach is that the selection of feature points comes almost at zero additional cost. Since zero motion is omnipresent in video sequences, we chose to add the zero-velocity object to our OME. This object has a constant parameter vector $\overline{P_0} = \overline{0}$ and covers stationary image parts including e.g. subtitles and broadcasters logos. During motion segmentation equation 2 is minimized and, as a consequence $\varepsilon_b(\overline{0,X},n)$ is calculated for all blocks. The actual cost of selecting the feature points is determined by the complexity of selecting the subset.

One way of selecting such a subset results by simply taking those $N$ regions that have the highest sum of absolute difference, i.e. $\varepsilon_b(\overline{0,X},n)$. This is the method used in our earlier OME contributions [1,12]. However, we found, and this is illustrated in Fig. 4a, that this method tends to locate the feature points in homogenous areas *adjacent* to high contrast edges, and not *on* the edge itself. This can be understood, as locating the feature points on the edge results in only half the pixels having different luminance values, while with feature points located adjacent to the edge *all* pixels will have different luminance values and hence a higher SAD.

Fig. 4b shows the consequences for a specific case: the parameter estimation error, $\varepsilon_p$, as a function of the translation parameters $t_x$ and $t_y$. 100 feature points are used selected with the HSAD method. The parameter estimation error surface, here, does not have a distinct minimum at the correct parameter vector, in this case $\overline{P_o} = (10,0,0,0)$, but instead the error surface is more or less flat in the area $t_x < -10$, which makes the estimation of the correct parameter vector impossible. Although the presented example is an extreme one, this characteristic will always negatively influence the performance.

### 3.2.2. Random SAD method (RSAD)

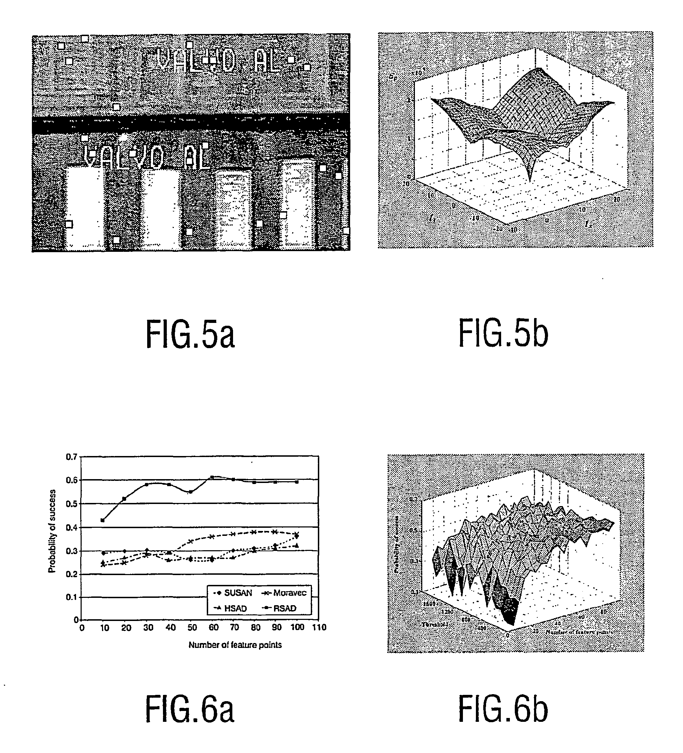

Because of the problems described in the previous sub-section, we developed a better scheme that is obtained when a *random selection* of $N$ blocks is made from all blocks for which the frame difference, $\varepsilon_b(\overline{0,X},n)$, is higher than a certain threshold. The threshold must be chosen high enough to remove all stationary and non-textured regions, but low enough to ensure that not only homogenous blocks, adjacent to high contrast edges, are selected as was the case in the previous algorithm. The actual value of the threshold depends on the level of noise in the video sequence. As can be seen from Fig. 5a, showing a detail of an image showing the positioning of the feature points by the RSAD method, this method selects, not only on the blocks *adjacent* to high contrast edges, but also *on* the moving high contrast edges. Fig. 5b shows the parameter estimation error, $\varepsilon_p$, as function of the translation *parameters $t_x$* and $t_y$. 100 feature points are used selected with the RSAD method. As a consequence, the logarithmic search turns out to find the minimum with a probability of 0.7. Also note that the "funnel" in the last case is much wider than the funnels in Figs. 3, which is an advantage when the global minimum has to be found with the computational efficient algorithm described in Subsection 2.3.

### 4. Experiments

Some experiments have been performed to quantify the performance of the feature point detectors. There are a number of demands the feature point detectors should fulfil in order to make them applicable in our software OME running real-time on a programmable device.

The feature point selection should be such that, even with a small number of feature points, accurate parameter estimation remains possible. The background of this demand is that small objects can only contain a few feature points. Hence, the minimum number of feature points, which enables accurate parameter estimation, is a measure for the minimum size of the objects that we can handle with our OME.

The feature points selection should result in a feature set enabling parameter estimation to be more or less robust against normal levels of noise also with smaller feature sets. The smaller the number of feature points, the larger the influence of noise. So, the robustness against noise also determines the minimum size of objects that our OME can handle.

Our feature point selection method should be computational simple.

The experiments are targeted to address these three conditions. Four artificial sequences are used in the experiments. In the first one, the content moves 5 pixels to right, in the second, the content moves 10 pixels to right, in the third, the content moves 5 pixels to bottom, and in the fourth, the content moves 10 pixels to bottom. We have constructed these sequences by taking a single image from each sequence and translating it over the mentioned motion vector to generate the next image.

4.1. Influence of the number of feature points

As mentioned earlier, the minimum number of feature points which results in accurate parameter estimation is a measure of the minimum size of the objects of which we can estimate the motion. Clearly, we like this minimum to be as low as possible. Fig. 6a shows how the probability of success, i.e. the probability that the logarithmic search described in Sub-section 1.3 results in the correct parameter vector, depends on the number of feature points. The probability of success is given for all four feature-point detectors (SUSAN, Moravec, HSAD, RSAD), with T = 200. The results shown in Fig. 6a are obtained by averaging the results of a specific feature point detector over all sequences. From this Fig. 6a, we can see that the probabilities of success of the SUSAN corner detector and the Moravec interest operator are rather low, too low for adequate parameter estimation. The background of these poor results has already been discussed in paragraph 2.1. The steepness of the features causes the "funnel" of the parameter estimation error surface to be very narrow. The result is that the simple logarithmic search algorithm cannot locate the minimum in a majority of the cases.

We can also see that the HSAD method draws similar results as the SUSAN and Moravec detector. As explained in Sub-section 2.2.1, the cause for this is not the steepness of the features within a feature point, but a lack of structure within the feature points. This results in a parameter estimation error surface that shows a large area that approximately has the same error at every position, making accurate parameter estimation impossible. The RSAD method has a probability of success that is a factor of 2 higher than the probabilities of success of the other methods. As was seen in Fig. 5a, this method selects blocks that show steep *and* shallow features. The shallow features are responsible for a widening of the "funnel" in the parameter estimation error surface, making it easier for the logarithmic search to descent in the "funnel" to the minimum.

Although the probability of success of the RSAD method is a factor of two higher than that of the other methods, we still need to try a number of initial parameter vectors in order to find the global minimum in the parameter estimation surface. In general, three trials are required to have a probability of roughly 95% of finding the correct parameter vector. Using our DSP, the OME can use only one logarithmic search per image. Hence it will take 3 images to find the correct vector. This problem will only occur at scene changes or in scenes with very erratic motion. Since the human visual system takes a couple of frames to converge after a scene change, this is not so much of a problem. In case of the other feature detectors, we will obtain the correct vector, on the average, after 8 frames.

The robustness of the RSAD algorithm in case of a varying number of feature points is good. Although the performance of the algorithm decreases with decreasing number of feature points, the performance is stable down to $N = 30$ feature points.

Fig. 6b shows how the performance of the RSAD method depends on the number of feature points *and* the threshold used, i.e. the probability of finding correct motion vectors as function of the number of feature points and the threshold of the RSAD method. Since only blocks with an $\varepsilon_b(\overline{0,X},n)$ above the threshold can become feature points, the threshold is an indication of the steepness of the features within the feature points or within the neighborhood of the feature points. The interesting thing is that with an increasing threshold, the performance decreases. This supports our comments on the influence of the steepness of features on the parameter estimation process. Where some applications benefit from steep features, our OME does not, it suffers from feature point sets in which only steep features are present.

4.2. Influence of noise

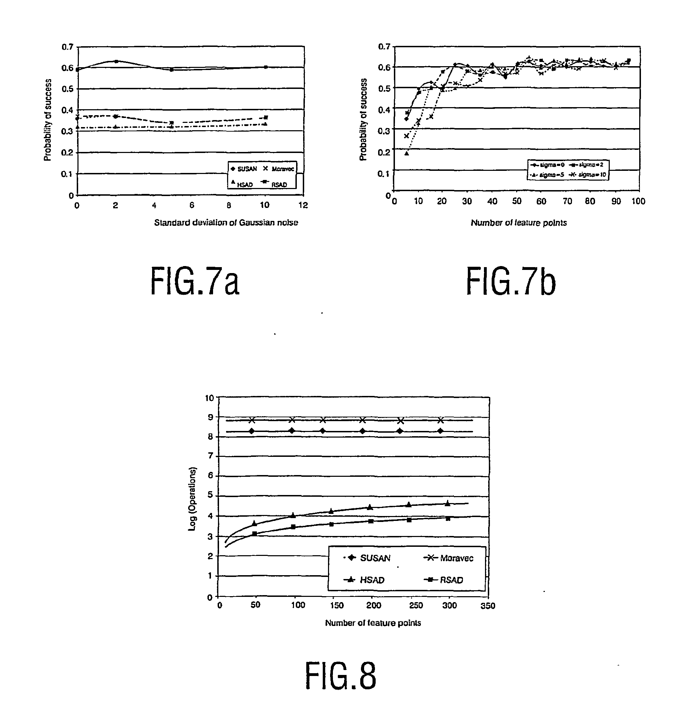

Since normal video material suffers from noise, our OME should be able to perform under different levels of noise. This means that both the motion segmentation and the parameter estimation modules should be robust under different levels of noise. It is to be expected that a higher noise level will influence the performance of the parameter estimation negatively. In this, the feature points play an important role. A smaller number of feature points will probably be more influenced by the noise than a larger number of feature points. The question is to what extent the performance of the parameter estimator is influenced by noise. An experiment is carried out to analyze this problem. The four artificial test sequences were contaminated with different levels of Gaussian noise. These sequences were fed to the different feature point detectors and the resulting feature points were used in the parameter estimation. The outcome using the different test-sequences was averaged and this result (probability of success as function of the standard deviation of Gaussian noise) is shown in Fig. 7a for the different feature point detectors SUSAN, Moravec, HSAD and RSAD. The number of feature points used is 100. Clearly, the performance of all feature point detectors is quite independent of the level of noise, at least with this rather large number of feature points.

The influence of the noise in combination with the number of feature points on the performance of the parameter estimation is shown in Fig. 7b, which shows the probability of success for RSAD method as function of the number of feature points. Results for different levels of Gaussian noise are shown. It can be seen that with 30 or more feature points, the performance becomes more or less independent from the level of noise. We already saw that the performance of the parameter estimator drops below the 30 feature points. It seems that 30 feature points per object is a minimum to obtain a robust parameter estimation.

4.3. Computational complexity

The last but certainly not the least important demand a feature point detector must fulfill before it can be used effectively in our OME is its computational complexity. A DSP has a very limited number of operations. In case of a TriMedia running at 150MHz, processing 50 images per second we can schedule approximately 7.5 Mops. Note that a TriMedia has 5 issue slots, for convenience we assumed a latency of two cycles per operation. A lot of these operations will be used in the motion segmentation and parameter estimation modules and only a very small number of operations can be used for feature point detection. An analysis of the algorithms we used in our experiments resulted in Fig. 8, which shows the number of operations used by a feature point detector as function of the number of feature points for the different feature point selection methods. The computational complexity of the algorithms was determined by simply counting the number of additions, subtractions, multiplication, fetches and stores used in a given algorithm.

Fig. 8 shows that the Moravec and SUSAN detectors have a computational complexity that is 2 orders of magnitude higher than what can be offered by the DSP. The HSAD and RSAD detectors take only a fraction ($1 \times 10^{-3}$) of the DSP resources. It is always somewhat dangerous to compare computational complexity Figs. if no optimal implementation on the platform is available. However, with the large differences between the complexity of the different algorithms it is safe to say that, in our case, the Moravec and SUSAN detectors are much too expensive. The HSAD is somewhat more expensive than the RSAD since a sorting algorithm has to be used.

The above description discusses the frame difference in terms of sub-sampled images since our object-based motion estimator processes sub-sampled images to reduce memory bandwidth and computational complexity.

The frames are sub-sampled 4 times horizontally and vertically, this means that the block size, original 8x8 pixels on the normal frames, is reduced to 2x2 pixels on the sub-sampled frames.

The threshold Tn depends on the block size and the noise level in the video sequence.

Corresponding to a block size of 2x2 pixels and a normal noise level (i.e. normal for broadcast material) is a lower limit of Tn = 20, when pixel values may run from 0 to 255. The probability that features are submerged in noise becomes too large below this minimum.

In our algorithm we use Tn = 30. To give an idea of the maximum value of the threshold: the performance of the motion estimator becomes significantly less with a threshold Tn = 100. The typical range of the threshold is:

| | |
|---|---|
| minimal: | 20 |
| optimal: | 30 |
| maximal: | 100 |

The number of feature points that is selected depends on the number of objects for which the motion is estimated. In our case 4 objects are used.

Per object we need a minimum of 10 feature points for every object. This to suppress the negative influences of noise and the randomness of the selection method.

The maximum amount of feature points is (in our case) governed by the resources which the Philips TriMedia IC offers. Right now, the maximum number of feature points is something like 200. From experiments we know that 100 feature points is a rather optimal amount for the current object-based motion estimator on TriMedia. The range for the number of feature points thus becomes:

| | |
|---|---|
| minimal: | 30 |

(continued)

| | |
|---|---|
| optimal: | 100 |
| maximal: | 200 |

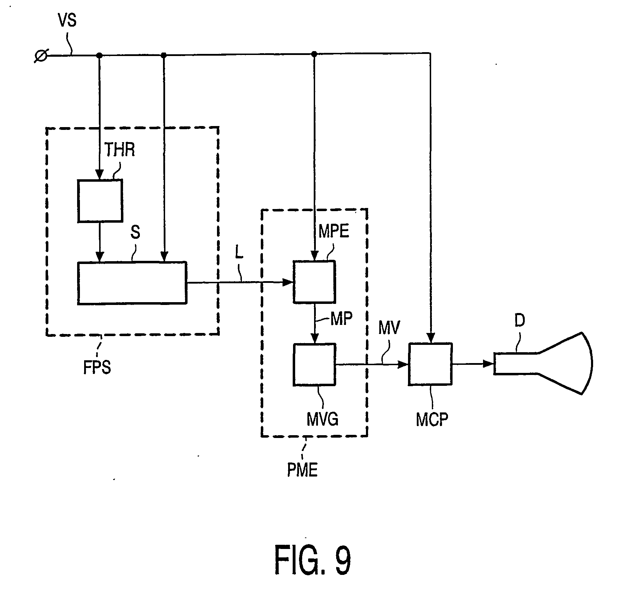

Fig. 9 shows an embodiment of a display apparatus in accordance with the present invention. A video signal VS is applied to a threshold circuit THR for determining at which locations in the image (VS) a temporal difference exceeds a predetermined threshold. The result is applied to a selection circuit S for making a selection of a number of selected locations L out of the locations at which the temporal difference exceeds the predetermined threshold. The threshold circuit THR and the selection circuit S together form a feature point selection device FPS. The selected locations L and the video signal VS are applied to a motion parameter estimator MPE for estimating motion parameters MP by minimizing a motion parameter estimation error at the selected locations L. A motion vector generator MVG generates motion vectors MV from the motion parameters MP. The motion parameter estimator MPE and the motion vector generator MVG together form a parametric motion estimator PME. The feature point selection device FPS and the parametric motion estimator PME together form a motion vector estimating device. The output of the motion vector estimation device FPS, PME is applied to a motion-compensated processor MCP for processing the video signal VS in dependence on the motion vectors MV. The motion-compensated processor MCP may carry out a 100 Hz conversion from a 50 Hz input signal, or may reduce the film conversion judder caused by the conversion of a 24 Hz film signal into a 50 Hz video signal by alternately twice or thrice repeating a film image. The motion vector estimation device FPS, PME and the motion-compensated processor MCP together form a motion-compensated processing device FPS, PME, MCP. A display device D displays an output signal of the motion-compensated processing device FPS, PME, MCP.

5. Conclusions

Recently, we reported on a recursive algorithm enabling real-time *object-based motion estimation* (OME) for standard definition video on a *digital signal processor* (DSP) [1,2,12]. The algorithm approximates the motion of objects in the image with parametric motion models and creates a segmentation mask by assigning the best matching model to image parts on a block-by-block basis. A parameter estimation module determines the parameters of the motion models on a small fraction of the pictorial data called feature points. In this description, we propose a new, computationally very efficient, feature point selection method that improves the convergence of the motion parameter estimation process, especially a feature point selection for object-based motion estimation on a programmable device. This method randomly selects N blocks from a set of blocks with a frame difference above a certain threshold $T_n$. The feature points are used in a parameter estimator for a real-time OME. The quality of the feature points is, therefore, measured within this application domain. The method was compared with 3 other methods. Two feature detectors known from literature, the *SUSAN* corner detector and the Moravec interest operator, and one that selects the N blocks with the highest frame difference, which was used in prior publications on OME. It was shown that the new feature point selection algorithm yields a better performance and has a lower computational complexity. Keywords for this invention are object-based motion estimation, motion segmentation, parameter estimation, feature points.

It should be noted that the above-mentioned embodiments illustrate rather than limit the invention, and that those skilled in the art will be able to design many alternative embodiments without departing from the scope of the appended claims. Instead of a frame difference, a field difference may be used. An image may be interlaced or progressive. While in the above-described preferred embodiment, a random selection is made to retain about 100 feature points out of an initial number of, say, 3000 feature points, any other selection method that selects both "strong" and "weak" features would do. For instance, just taking each 30th feature point would also result in both "strong" and "weak" features in the final list of 100 feature points selected from the 3000 initial feature points.

The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

REFERENCES

[1] R.B. Wittebrood and G. de Haan. "Second generation video format conversion software for a digital signal processor", IEEE Transactions on Consumer Electronics, 46(3), pp. 857-865, Aug. 2000.

[2] R.B. Wittebrood and G. de Haan. "Real-time recursive motion segmentation of video data on a programmable device", August issue of IEEE Transaction on Consumer Electronics, 47(3), pp. 559-567, Aug. 2001.

[3] A.M. Tekalp. Digital Video Processing. Prentice Hall, 1995. ISBN 0-13-190075-7.

[4] S.M. Smith. Reviews of Optic flow, Motion segmentation, Edge finding and Corner finding, Technical Report TR97SMS1, Oxford University, UK, 1997.

[5] S.M. Smith and J.M. Brady. SUSAN-A new approach to low level image processing, Technical Report TR95SMS1c, Oxford University, UK, 1995

[6] C.G. Harris and M. Stephens. "A combined corner and edge detector", 4-th Alvey Vision Conference, pp. 147-151, 1988.

[7] H.P. Moravec. "Towards automatic visual obstacle avoidance", Proceedings of the 1994 IEEE Computer Society Conference on Computer Vision and Pattern Recognition, pp. 768-772.

[8] G. de Haan, P. Biezen, H. Huigen and O.Ojo, 'Graceful degradation in motion-compensated field rate conversion, ' Proc. of the International workshop on HDTV 1993, Ottawa, Canada, pp. 249-256.

[9] C. Stiller. "Object-based estimation of dense motion fields.", IEEE Transactions on Image Processing, 6(2), pp. 234-250, Feb. 1997.

[10] N. Diehl. "Object-oriented motion estimation and segmentation in image sequences.", Signal Processing: Image Communications, 3(1), pp. 23-56, Feb. 1991.

[11] A. Amer and E. Dubois. "Segmentation-based motion estimation for video processing using object-based detection of motion types. In Proceedings of the SPIE (VCIP), pp. 1475-1486, Jan. 1999.

[12] R.B. Wittebrood and G. de Haan. "Second generation DSP software for picture rate conversion", In Proceedings of the ICCE, pp. 230-231, June 13, 2000.

**Claims**

1. A method for estimating motion vectors (MV) of an image (VS) of a video signal, the method comprising:

   determining (THR) at which locations in the image (VS) a temporal difference exceeds a predetermined threshold; and

   making (S) a random selection of a number of selected locations (L) out of the locations at which the temporal difference exceeds the predetermined threshold; and

   estimating the motion vectors (MV) based on the selected locations (L), wherein estimating the motion vectors (MV) based on the selected locations (L) comprises:

   - applying the selected locations (L) and the video signal to a motion parameter estimator (MPE), the motion parameter estimator (MPE) estimating motion parameters (MP) of a parameter vector to describe the translation and zooming of an object of the image (VS), the motion parameters (MP) being estimated by minimizing a motion parameter estimation error at the selected locations (L);

   - generating the motion vectors (MV) from the motion parameters (MP) that describe the translation and zooming of the object.

2. A method as claimed in claim 1, wherein the predetermined threshold is between 20 and 100, preferably 30, when pixel values may run from 0 to 255.

3. A method as claimed in claim 1, wherein the number of selected locations is between 30 and 200, preferably 100.

4. A device (FPS, PME) for estimating motion vectors in an image (VS) of a video signal, the motion vector estimating device comprising:

   means (THR) for determining at which locations in the image (VS) a temporal difference exceeds a predetermined threshold; and

   means (S) for making a random selection of a number of selected locations (L) out of the locations at which the temporal difference exceeds the predetermined threshold;

   means (MPE) for estimating motion parameters (MP) of a parameter vector from the selected locations (L) and the video signal to describe the translation and zooming of an object of the image (VS), the motion parameters (MP) being estimated by minimizing a motion parameter estimation error at the selected locations (L); and

   means (MVG) for generating motion vectors (MV) from the motion parameters (MP).

**5.** A motion-compensated processing device (FPS, PME, MCP), comprising:

a device (FPS, PME) for estimating motion vectors as claimed in claim 4; and
means (MCP) for processing an image (VS) of the video signal in dependence on the motion vectors (MV).

**6.** An image display apparatus, comprising:

a motion-compensated processing device (FPS, PME, MCP) as claimed in claim 5; and
a display device (D) for displaying an output signal of the motion-compensated processing device (FPS, PME, MCP).

**Patentansprüche**

**1.** Verfahren zum Schätzen von Bewegungsvektoren (MV) eines Bilds (VS) aus einem Videosignal, wobei das Verfahren umfasst:

Bestimmen (THR), an welchen Stellen im Bild eine Zeitdifferenz einen vorbestimmten Schwellenwert überschreitet; und
Duchführen (S) einer Zufallsauswahl einer Anzahl von ausgewählten Stellen (L) aus den Stellen, an denen die Zeitdifferenz den vorbestimmten Schwellenwert überschreitet; und
Schätzen der Bewegungsvektoren (MV) auf Grundlage der ausgewählten Stellen (L), wobei das Schätzen der Bewegungsvektoren (MV) auf Grundlage der ausgewählten Stellen (L) umfasst:

- Anlegen der ausgewählten Stellen (L) und des Videosignals an eine Bewegungsparameterschätzeinrichtung (MPE), wobei die Bewegungsparameterschätzeinrichtung (MPE) Bewegungsparameter (M) eines Parametervektors schätzt, um die Translation und das Zoomen eines Gegenstands des Bilds (VS) zu beschreiben, wobei die Bewegungsparameter (MP) durch Minimieren eines Bewegungsparameterschätzfehlers an den ausgewählten Stellen (L) geschätzt werden;
- Generieren der Bewegungsvektoren (MV) aus den Bewegungsparametern (MP), die die Translation und das Zoomen des Gegenstands beschreiben.

**2.** Verfahren nach Anspruch 1, wobei der vorbestimmte Schwellenwert zwischen 20 und 100, vorzugsweise 30 beträgt, wenn Pixelwerte von 0 bis 255 gehen können.

**3.** Verfahren nach Anspruch 1, wobei die Anzahl von ausgewählten Stellen zwischen 30 und 200, vorzugsweise 100 beträgt.

**4.** Vorrichtung (FPS, PME) zum Schätzen von Bewegungsvektoren in einem Bild (VS) aus einem Videosignal, wobei die Bewegungsvektorschätzvorrichtung umfasst:

eine Einrichtung (THR) zum Bestimmen, an welchen Stellen im Bild (VS) eine Zeitdifferenz einen vorbestimmten Schwellenwert überschreitet; und
eine Einrichtung (S) zum Durchführen einer Zufallsauswahl einer Anzahl von ausgewählten Stellen (L) aus den Stellen, an denen die Zeitdifferenz den vorbestimmten Schwellenwert überschreitet;
eine Einrichtung (MPE) zum Schätzen von Bewegungsparametern (MP) eines Parametervektors aus den ausgewählten Stellen (L) und dem Videosignal, um die Translation und das Zoomen eines Gegenstands des Bilds (VS) zu beschreiben, wobei die Bewegungsparameter (MP) durch Minimieren eines Bewegungsparameterschätzfehlers an den ausgewählten Stellen (L) geschätzt werden; und
eine Einrichtung (MVG) zum Generieren von Bewegungsvektoren (MV) ausgehend von den Bewegungsparametern (MP).

**5.** Bewegungskompensierte Verarbeitungsvorrichtung (FPS, PME, MCP), Folgendes umfassend:

eine Vorrichtung (FPS, PME) nach Anspruch 4, zum Schätzen von Bewegungsparametern; und
eine Einrichtung (MCP) zum Verarbeiten eines Bilds (VS) aus dem Videosignal in Abhängigkeit von den Bewegungsvektoren (MV).

**6.** Bildanzeigevorrichtung, Folgendes umfassend:

eine bewegungskompensierte Verarbeitungsvorrichtung (FPS, PME, MCP) nach Anspruch 5; und
eine Anzeigevorrichtung (D) zum Anzeigen eines Ausgangssignals der bewegungskompensierten Verarbeitungsvorrichtung (FPS, PME, MCP).

**Revendications**

**1.** Procédé d'estimation de vecteurs de mouvement (MV) d'une image (VS) d'un signal vidéo, le procédé comprenant :

le fait de déterminer (THR) à quels emplacements dans l'image (VS) une différence temporelle excède un seuil prédéterminé ; et
le fait d'effectuer (S) une sélection aléatoire d'un nombre d'emplacements sélectionnés (L) parmi les emplacements auxquels la différence temporelle excède le seuil prédéterminé ; et
l'estimation des vecteurs de mouvement (MV) sur la base des emplacements sélectionnés (L), où l'estimation des vecteurs de mouvement (MV) sur la base des emplacements sélectionnés (L) comprend :

- l'application des emplacements sélectionnés (L) et du signal vidéo à un estimateur de paramètres de mouvement (MPE), l'estimateur de paramètres de mouvement (MPE) estimant des paramètres de mouvement (MP) d'un vecteur de paramètres pour décrire la translation et l'agrandissement d'un objet de l'image (VS), les paramètres de mouvement (MP) étant estimés en minimisant une erreur d'estimation de paramètres de mouvement aux emplacements sélectionnés (L) ;
- le fait de générer les vecteurs de mouvement (MV) à partir des paramètres de mouvement (MP) qui décrivent la translation et l'agrandissement de l'objet.

**2.** Procédé tel que revendiqué dans la revendication 1, où le seuil prédéterminé est compris entre 20 et 100, de préférence 30, quand les valeurs de pixel peuvent aller de 0 à 255.

**3.** Procédé tel que revendiqué dans la revendication 1, où le nombre d'emplacements sélectionnés est compris entre 30 et 200, de préférence 100.

**4.** Dispositif (FPS, PME) destiné à estimer des vecteurs de mouvement dans une image (VS) d'un signal vidéo, le dispositif d'estimation de vecteurs de mouvement comprenant :

des moyens (THR) de déterminer à quels emplacements dans l'image (VS) une différence temporelle excède un seuil prédéterminé ; et
des moyens (S) d'effectuer une sélection aléatoire d'un nombre d'emplacements sélectionnés (L) parmi les emplacements auxquels la différence temporelle excède le seuil prédéterminé ; et
des moyens (MPE) d'estimer des paramètres de mouvement (MP) d'un vecteur de paramètres à partir des emplacements sélectionnés (L) et du signal vidéo pour décrire la translation et l'agrandissement d'un objet de l'image (VS), les paramètres de mouvement (MP) étant estimés en minimisant une erreur d'estimation de paramètres de mouvement aux emplacements sélectionnés (L) ; et
des moyens (MVG) de générer des vecteurs de mouvement (MV) à partir des paramètres de mouvement (MP).

**5.** Dispositif de traitement à compensation de mouvement (FPS, PME, MCP), comprenant :

un dispositif (FPS, PME) destiné à estimer des vecteurs de mouvement tel que revendiqué dans la revendication 4 ; et
des moyens (MCP) de traiter une image (VS) du signal vidéo en fonction des vecteurs de mouvement (MV).

**6.** Appareil d'affichage d'image, comprenant :

un dispositif de traitement à compensation de mouvement (FPS, PME, MCP) tel que revendiqué dans la revendication 5 ; et
un dispositif d'affichage (D) destiné à afficher un signal de sortie du dispositif de traitement à compensation d'image (FPS, PME, MCP).

FIG.1a

FIG.1b

FIG.2a  FIG.2b  FIG.2c

FIG.2d  FIG.2e  FIG.2f

EP 1 435 070 B1

FIG.3a

FIG.3b

FIG.4a

FIG.4b

FIG.5a

FIG.5b

FIG.6a

FIG.6b

FIG.7a

FIG.7b

FIG.8

VS

THR

S

FPS

L

MPE

MP

MV

MVG

PME

MCP

D

# FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0139498 A

**Non-patent literature cited in the description**

- **R.B. WITTEBROOD ; G. DE HAAN.** Second generation video format conversion software for a digital signal processor. *IEEE Transactions on Consumer Electronics,* August 2000, vol. 46 (3), 857-865
- **R.B. WITTEBROOD ; G. DE HAAN.** Real-time recursive motion segmentation of video data on a programmable device. *IEEE Transaction on Consumer Electronics,* August 2001, 559-567
- **A.M. TEKALP.** Digital Video Processing. Prentice Hall, 1995
- **S.M. SMITH.** Reviews of Optic flow, Motion segmentation, Edge finding and Corner finding. *Technical Report TR97SMS1, Oxford University, UK,* 1997
- **S.M. SMITH ; J.M. BRADY.** SUSAN-A new approach to low level image processing. *Technical Report TR95SMS1c, Oxford University, UK,* 1995
- **C.G. HARRIS ; M. STEPHENS.** A combined corner and edge detector. *4-th Alvey Vision Conference,* 1988, 147-151
- **H.P. MORAVEC.** Towards automatic visual obstacle avoidance. *Proceedings of the 1994 IEEE Computer Society Conference on Computer Vision and Pattern Recognition,* 1994, 768-772
- **G. DE HAAN ; P. BIEZEN ; H. HUIGEN ; O.OJO.** Graceful degradation in motion-compensated field rate conversion. *Proc. of the International workshop on HDTV 1993, Ottawa, Canada,* 1993, 249-256
- **C. STILLER.** Object-based estimation of dense motion fields. *IEEE Transactions on Image Processing,* February 1997, vol. 6 (2), 234-250
- **N. DIEHL.** Object-oriented motion estimation and segmentation in image sequences. *Signal Processing: Image Communications,* February 1991, vol. 3 (1), 23-56
- **A. AMER ; E. DUBOIS.** Segmentation-based motion estimation for video processing using object-based detection of motion types. *Proceedings of the SPIE (VCIP),* January 1999, 1475-1486
- **R.B. WITTEBROOD ; G. DE HAAN.** Second generation DSP software for picture rate conversion. *Proceedings of the ICCE,* 13 June 2000, 230-231